# EUROPÄISCHE PATENTSCHRIFT

(11) **EP 2 490 863 B1**
(45) Veröffentlichungstag und Bekanntmachung des Hinweises auf die Patenterteilung: **28.09.2016**
(21) Anmeldenummer: 10768445.8
(22) Anmeldetag: 08.10.2010
(51) Int. Cl.: B25F 5/00, A61C 1/07, A61C 3/03, B26D 7/08

(54) **ELEKTROWERKZEUGMASCHINE MIT ULTRASCHALLANREGUNG**
ELECTRIC POWER TOOL WITH ULTRASONIC EXCITATION
MACHINE-OUTIL ÉLECTRIQUE À EXCITATION PAR ULTRASONS

(30) Priorität: 23.10.2009 DE 102009045945
(43) Veröffentlichungstag der Anmeldung: 29.08.2012
(73) Patentinhaber: Robert Bosch GmbH, 70442 Stuttgart (DE)
(72) Erfinder: Roser, Jochen, 71636 Ludwigsburg (DE)
(86) Internationale Anmeldenummer: PCT/EP2010/065112
(87) Internationale Veröffentlichungsnummer: WO 2011/047974

(56) Entgegenhaltungen:
- EP-A1- 2 057 961
- WO-A1-97/39395
- DE-A1- 2 056 888
- US-A- 5 101 599
- US-A- 5 355 587
- US-A1- 2008 293 008

## Beschreibung

### Stand der Technik

Die Erfindung betrifft eine Elektrowerkzeugmaschine mit Ultraschallanregung für ein linear und/oder oszillierend antreibbares Werkzeug.

Die DE 42 91110 T1 offenbart ein Ultraschall-Schneidgerät zum Entfernen von Gipsbandagen und Kunststoff-Formbandagen bei Patienten zur Behandlung oder nach erfolgter Heilung. Um den Betriebszustand des Ultraschall-Schneidgeräts anzuzeigen und als Warnung, dass sich die Schneidklinge in einem schneidenden Betriebszustand befindet, ist ein akustischer Signalgeber vorgesehen, der bei Betätigen des Schalters ein Summsignal abgibt.

Die DE 20 56 888 A1 betrifft eine Elektrowerkzeugmaschine für Zahnbehandlung, bei der eine Abstimmanzeigenlampe durch eine maximale Leuchtkraft einen maximalen Strom für den Ultraschallwandler zur Anzeige einer Resonanz angibt.

In der US 2008/0293008 A1 ist ein dentales Elektrowerkzeug beschrieben, bei dem eine Vorrichtung zur Ausgabe eines elektrischen oder optischen Testsignals umfasst ist. Durch Analyse des Testsignals kann auf Amplitude und Ausgangsleistung einer Ultraschallspitze geschlossen werden und ein Ultraschallgenerator entsprechend angepasst werden.

Aus der US 5 101 599 A geht eine stationäre Ultraschallwerkzeugmaschine hervor, bei der eine lastabhängige Veränderung der Resonanzamplitude des Ultraschallsystems erkannt und entsprechend angepasst wird.

Die WO 97/39395 A1 lehrt eine Schneidevorrichtung, wobei bei Verlassen eines zulässigen Schneidkräftebereichs ein Alarmsignal ausgegeben oder die Vorrichtung automatisch abgeschaltet werden kann.

In der US 5 355 587 A wird eine Ultraschallschneidemaschine vorgestellt, bei der während der Betätigung eines Aktivierungsschalters ein Arbeitston ausgegeben wird.

Schließlich betrifft die EP 2 057 961 A1 eine dentale Ultraschallvorrichtung, die ein Signalmittel aufweist, das bei Überlast den Benutzer akustisch und/oder optisch informiert.

### Offenbarung der Erfindung

Die Erfindung geht aus von einer Elektrowerkzeugmaschine umfassend einen Bereich mit Ultraschallanregung für ein linear und/oder oszillierend antreibbares Werkzeug, mit einer Antriebseinheit zur Ultraschallanregung, einer Elektronikeinheit zum Beaufschlagen der Antriebseinheit mit wenigstens Steuer- und/oder Regelsignalen, sowie einer Betriebsspannungseinheit, wobei die Antriebseinheit wenigstens einen Ultraschall-Anregungsaktor umfasst, welcher im Betrieb von der Betriebsspannungseinheit elektrisch versorgt ist und von der Elektronikeinheit gesteuert oder geregelt ist, wobei eine Vorrichtung vorgesehen ist zur Ausgabe eines Informationssignals, das abhängig von wenigstens einem Betriebsparameter der Elektrowerkzeugmaschine ausgebbar ist.

Die Vorrichtung ist dazu ausgebildet, Frequenz und/oder Amplitude des Informationssignals abhängig von einem oder mehreren aktuellen Betriebsparametern zu variieren. Durch das Informationssignal kann eine Rückmeldung zur Systemleistung oder auch zu anderen Systemparametern an den Anwender erfolgen.

Es wird vorgeschlagen, dass ein erster Bestandteil des Informationssignals mit einem ersten Betriebsparameter und ein zweiter Bestandteil des Informationssignals mit einem zweiten Betriebsparameter verknüpfbar ist. So kann z.B. die Frequenz als Anzeige der benötigten Ultraschallleistung dienen und die Lautstärke als Anzeige für die Anregungsamplitude des Anregungsaktors.

Die Elektrowerkzeugmaschine arbeitet im Wesentlichen geräuschfrei, so dass der Anwender am Informationssignal erkennen kann, ob die Elektrowerkzeugmaschine in Betrieb ist oder nicht. Das Informationssignal wird vorzugsweise so lange ausgegeben, solange der Anregungsaktor in Betrieb ist. Die Betriebssicherheit der Elektrowerkzeugmaschine wird erhöht. Das Informationssignal kann z.B. ein hörbarer Ton, ein spürbares Vibrieren und/oder eine sichtbare Beleuchtung sein. Durch das variable Informationssignal kann dem Anwender ein aktueller Betriebszustand der Elektrowerkzeugmaschine mitgeteilt werden, ohne diesen von seiner eigentlichen Bearbeitungstätigkeit mit der Elektrowerkzeugmaschine abzulenken. Der Anwender kann über das Informationssignal z.B. eine aktuell benötigte Ultraschallleistung mitgeteilt werden.

Dabei kann das Werkzeug ein Einsatzwerkzeug sein, das lösbar mit dem Anregungsaktor verbunden ist, oder es kann mit dem Anregungsaktor fest verbunden sein, beispielsweise stoffschlüssig oder kraftschlüssig. Die Elektrowerkzeugmaschine ist insbesondere eine Bearbeitungsmaschine, mit der Gegenstände oder Oberflächen bearbeitet oder verändert werden, wie etwa Bohrer, Bohrhämmer, Schneidwerkzeuge, Schleifmaschinen, Fräsen, Sägen, Schweißgeräte und dergleichen. Der Anregungsaktor kann den einzigen Antrieb des Werkzeugs bilden, oder es können auch eine oder mehrere weitere Antriebskomponenten, etwa ein Elektromotor, vorgesehen sein, bei denen auch die Arbeitsbewegungen überlagert werden können. Die verschiedenen Antriebskomponenten können alternativ oder in Kombination betrieben werden.

Der wenigstens eine Anregungsaktor kann einen Hauptenergieverbraucher der Elektrowerkzeugmaschine bilden, für den vorzugsweise mindestens 50% elektrische Eingangsleistung vorgesehen sein können. In einer günstigen Weiterbildung kann für den Anregungsaktor mindestens 75%, vorzugsweise mindestens 80% der elektrischen Eingangsleistung vorgesehen sein. Der Arbeitsfortschritt der Elektrowerkzeugmaschine beim Einsatz von Ultraschall ist besonders groß, so dass ein etwaiger weiterer Energieverbraucher, insbesondere eine weitere Antriebskomponente, wie etwa eine

Elektromaschine, kleiner ausgelegt werden kann. Damit kann auch der Antrieb und die zugehörigen Elektronikkomponenten und die Energieversorgung kleiner ausfallen, was wiederum einen verbesserten Bedienkomfort und eine verbesserte Handhabung der handgehaltenen Elektrowerkzeugmaschine erlaubt.

Die Elektrowerkzeugmaschine kann batteriebetrieben oder auch alternativ oder zusätzlich mit einem Netzkabel ausgestattet sein. Die Elektrowerkzeugmaschine kann mehrere Teile umfassen, die in separaten Gehäusen untergebracht sind, wobei der Anwender beispielsweise nur das Gehäuse hält, in dem der eigentliche Werkzeugbereich angeordnet ist. Vorteilhaft kann die Elektrowerkzeugmaschine eine handgehaltene Maschine hoher Arbeitsleistung sein, bei der alle Komponenten in einem einzigen Gehäuse integriert sind, so dass ein Anwender diese bequem mit der Hand halten und führen kann, ohne durch Kabelverbindungen zu einem separaten Steuergerät gestört zu sein.

Eine besonders hohe mechanische Ausgangsleistung bei ausreichend hoher Güte des Schwingsystems entsprechend einer elektrischen Eingangsleistung kann abgegeben werden, wenn der Anregungsaktor mit seiner Resonanzfrequenz betrieben werden kann. Der Anregungsaktor kann z.B. als Piezoaktor in Bauweise eines Langevin-Schwingers ausgeführt sein. Das Resonanzsystem des Anregungsaktors, das die Resonanzfrequenz aufweist, umfasst den Langevin-Schwinger mit piezoelektrisch aktivem Material und an den Schwinger angekoppelte Komponenten, insbesondere Komponenten, die den Ultraschall verstärken und/oder zu einem Bearbeitungsort übertragen. Solche Komponenten sind z.B. als Booster oder Sonotrode bekannt. Dies ermöglicht eine Baugrößenreduktion und die Bereitstellung eines kompakten Geräts. Vorteilhaft wird damit eine kompakte Elektrowerkzeugmaschine hoher Leistungsfähigkeit geschaffen, die gleichzeitig handlich ist.

Gemäß einer vorteilhaften Ausgestaltung der Erfindung kann die Vorrichtung dazu ausgebildet sein, die Frequenz und/oder die Amplitude des Informationssignals mit zunehmender Bearbeitungsleistung abzusenken. Bei einem hörbaren Informationssignal simuliert ein Absenken der Frequenz z.B. ausgehend von einem Leerlauf-Grundton ein Geräuschbild eines elektromotorbetriebenen Maschine. Das hörbare Informationssignal kann auch (über die Amplitude) in der Lautstärke verändert werden. Alternativ kann die Vorrichtung dazu ausgebildet sein, die Frequenz und/oder die Amplitude mit zunehmender Bearbeitungsleistung zu erhöhen. Auf jeden Fall kann durch das betriebszustandsabhängig variable Informationssignal ein aktueller Betriebszustand der Elektrowerkzeugmaschine dem Anwender mitgeteilt werden, ohne diesen von seiner eigentlichen Bearbeitungstätigkeit abzulenken.

Gemäß einer vorteilhaften Ausgestaltung der Erfindung kann die Vorrichtung zur Veränderung der Frequenz und/oder der Amplitude mit der Betriebsspannungseinheit so gekoppelt sein, dass die Frequenz und/oder die Amplitude abhängig vom aktuellen Betriebsstrom oder der aktuellen Betriebsspannung einstellbar ist. Betriebsstrom und Betriebsspannung sind leicht zugänglich und können vorteilhaft zur Veränderung des Informationssignals herangezogen werden.

Gemäß einer vorteilhaften Ausgestaltung der Erfindung kann die Vorrichtung dazu ausgebildet sein, bei Erreichen eines kritischen Betriebsparameters einen Alarm auszusenden. So kann das Erreichen oder Überschreiten der Betriebsgrenze signalisiert werden. Andere kritische Betriebsparameter können ebenfalls in dieser Weise dargestellt werden, wie etwa das Erreichen eines maximal zulässigen Temperaturniveaus, z.B. der Ansteuerelektronik oder des Anregungsaktors; das Erreichen einer minimalen Batteriekapazität bei kabellosen Elektrowerkzeugmaschinen; eine Bearbeitung ungeeigneter Werkstoffe; ein nicht ordnungsgemäß sitzendes Sonotrodenwerkzeug; sonstige allgemeine Systemfehler.

Gemäß einer vorteilhaften Ausgestaltung der Erfindung kann die Vorrichtung eine Lautsprechereinrichtung umfassen, z.B. mit einem Piezolautsprecher. Es kann ein angenehmer Leerlauf-Grundton mit angenehmer geringer Lautstärke ausgegeben werden, der z.B. entsprechend der aktuell benötigten Arbeitsleistung in Frequenz und/oder Leistung verändert werden kann. Alternativ oder zusätzlich kann gemäß einer vorteilhaften Ausgestaltung der Erfindung kann die Vorrichtung eine mechanische Vibrationseinheit umfassen, vorzugsweise in einem Griffbereich des Gehäuses. Alternativ oder zusätzlich kann gemäß einer weiteren vorteilhaften Ausgestaltung der Erfindung kann die Vorrichtung eine Leuchteneinheit umfassen. Dabei kann die Farbe und/oder Leuchtstärke variiert werden. Die Leuchteneinheit kann dazu vorgesehen sein, einen Arbeitsbereich auszuleuchten. Dies kann der Anwender "aus dem Augenwinkel" wahrnehmen, ohne speziell eine Anzeige ablesen zu müssen. Der Anwender kann jeweils den Arbeitsbereich im Blickfeld behalten und wird nicht durch den Blick auf Geräteanzeigen oder Displays abgelenkt.

Gemäß einem weiteren Aspekt der Erfindung wird ein Ultraschall-Stationärgerät vorgeschlagen, das eine Vorrichtung umfasst zur Ausgabe eines Informationssignals, das abhängig von wenigstens einem Betriebsparameter des Ultraschall-Stationärgeräts ausgebbar ist, wobei die Vorrichtung, dazu ausgebildet ist, Frequenz und/oder Amplitude des Informationssignals abhängig von einem aktuellen Betriebsparameter der zu variieren. Solche Ultraschall-Stationärgeräte können z.B. sein Ultraschall-Schweißgeräte, Ultraschall-Schneidgeräte, Ultraschall-Siebsysteme, Ultraschall-Vernebler oder -Zerstäuber. Auch hier kann die Betriebssicherheit erhöht werden, wenn der Anwender durch ein Informationssignal darüber informiert wird, dass das Gerät in Betrieb ist.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: ein Ausführungsbeispiel einer handgehaltenen Elektrowerkzeugmaschine in einer Ausgestaltung als Schneidgerät;
- Fig. 2: ein weiteres Ausführungsbeispiel einer handgehaltenen Elektrowerkzeugmaschine in einer Ausgestaltung als Bohrgerät;
- Fig. 3: eine als Winkelschleifer ausgebildete elektrische Elektrowerkzeugmaschine im Schnitt; und
- Fig. 4: eine Schaltung zur Erzeugung eines Informationssignals.

### Ausführungsformen der Erfindung

In den Figuren sind gleiche oder gleichartige Komponenten mit gleichen Bezugszeichen beziffert.

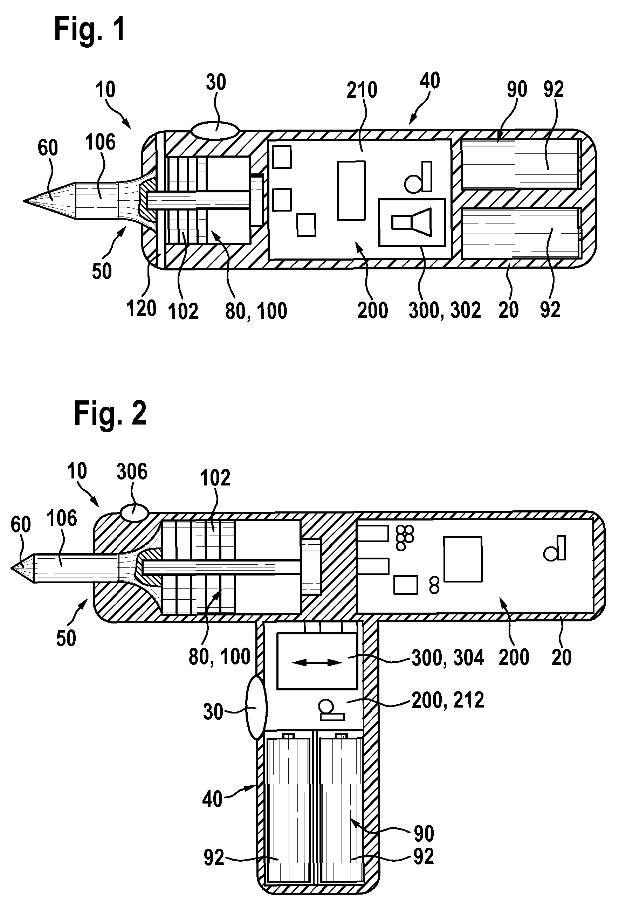

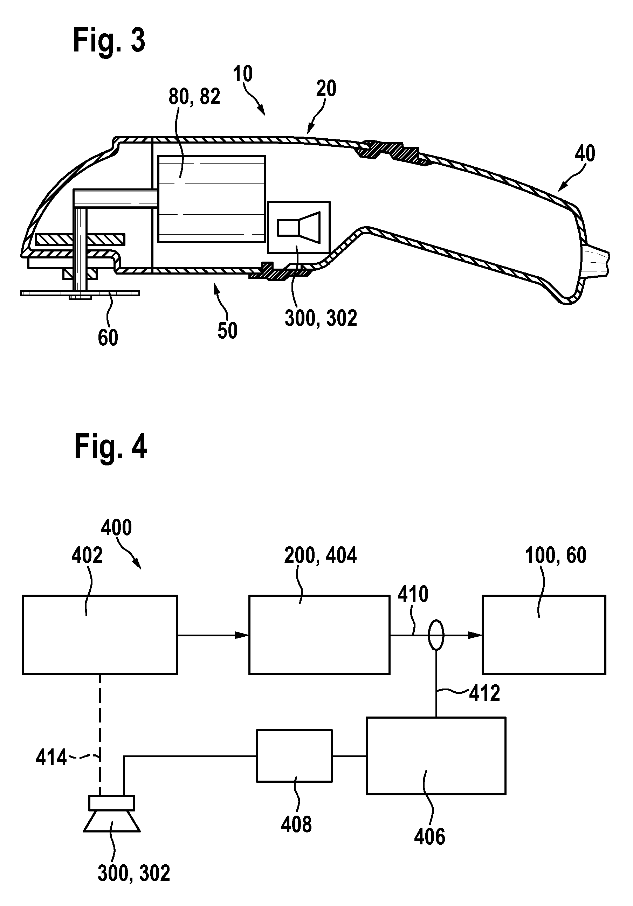

Zur Erläuterung der Erfindung zeigen die Figuren 1, 2 und 3 verschiedene Beispiele von handgehaltenen Elektrowerkzeugmaschinen 10. Fig. 1 zeigt ein Schneidgerät mit langgestreckter Gehäuseform; Fig. 2 zeigt ein Bohrgerät mit T-förmiger Gehäuseform, und Fig. 3 zeigt einen Winkelschleifer, bei dem eine als Schleifscheibe ausgebildetes Werkzeug 60 zusätzlich zu ihrer rotatorischen Arbeitsbewegung in hochfrequente Schwingungen versetzt wird.

Die jeweilige handgehaltene Elektrowerkzeugmaschine 10 umfasst ein Gehäuse 20 mit einem Griffbereich 40. Ein Anwender hält die Elektrowerkzeugmaschine 10 an dem Griffbereich 40 und kann die Elektrowerkzeugmaschine 10 führen. Der Griffbereich 40 kann gegebenenfalls mit einem nicht dargestellten Dämpfungselement gegenüber andern Gehäusebereichen entkoppelt sein. Die Elektrowerkzeugmaschine 10 umfasst ferner einen Werkzeugbereich 50 für ein linear und/oder oszillierend antreibbares Werkzeug 60, etwa ein Messer (Fig. 1) oder einen Bohrer (Fig. 2), eine Schleifscheibe (Fig. 3) oder ein anderes Werkzeug entsprechend einem anderen Gerätetyp.

Die jeweilige Elektrowerkzeugmaschine 10 umfasst ferner einen Bereich 50 mit Ultraschallanregung für ein linear und/oder oszillierend antreibbares Werkzeug 60, mit einer Antriebseinheit 80 zur Ultraschallanregung, einer Elektronikeinheit 200 zum Beaufschlagen der Antriebseinheit 80 mit wenigstens Steuer- und/oder Regelsignalen (in Fig. 3 nicht explizit dargestellt), sowie einer Betriebsspannungseinheit 90 (in Fig. 3 nicht explizit dargestellt), wobei die Antriebseinheit 80 wenigstens einen Anregungsaktor 100 mit einem Volumen anregungsaktiven Materials umfasst, welcher im Betrieb von der Betriebsspannungseinheit 90 elektrisch versorgt ist und von der Elektronikeinheit 200 gesteuert oder geregelt ist.

Zweckmäßigerweise können Antriebseinheit 80, Elektronikeinheit 200 und Betriebsspannungseinheit 90 so im Gehäuse 20 verteilt sein, dass ein Masseschwerpunkt im Bereich des Griffteils 40 liegt. Der Anwender kann die Elektrowerkzeugmaschine 10 sicher und bequem handhaben.

Ein gehäuseseitiges Bedienteil 30 dient zur anwenderseitigen Aktivierung des Werkzeugs 60 und/oder der Elektrowerkzeugmaschine 10. Das Bedienteil 30 kann z.B. ein Schalter oder ein Regler sein oder auch mehrere Bedienelemente umfassen, von denen z.B. eines zum Einschalten der Elektrowerkzeugmaschine 10 und eines zum Einschalten und/oder Regeln des Werkzeugs 60 vorgesehen sein kann.

Im Gehäuse 20 ist die Antriebseinheit 80 angeordnet, die in den Beispielen gemäß Fig. 1 und Fig. 2 nur eine Antriebskomponente umfasst, die durch einen Anregungsaktor 100 gebildet ist, z.B. einen Piezo-angeregten Langevin-Schwinger (auch Piezoaktor genannt) mit einem Volumen piezoelektrisch aktiven Materials 102 Bei Beaufschlagung mit hochfrequenter elektrischer Spannung wird in an sich bekannter Weise Ultraschall generiert, der über einen Koppelelement 106, etwa eine Sonotrode, zu dem Werkzeug 60 geleitet wird. Das Koppelelement 106 kann eine an sich bekannte Sonotrode sein. Die Länge und die Form wie auch das Material des Koppelelements 106 bestimmen die Resonanzfrequenz des Anregungsaktors 100. Auch das Werkzeug 60 kann die Resonanzfrequenz beeinflussen. In den Ausführungsvarianten in Fig. 1 und Fig. 2 ist der Anregungsaktor 100 so ausgeführt, dass Langevin-Schwinger und Koppelelement 106 in einer Einheit zusammengefasst sind, und deren gesamte Länge in etwa der halben Wellenlänge λ/2 der Ultraschallschwingung entspricht. Andere Ausführungsvarianten können vorsehen, dass der Anregungsaktor 100 zusammengesetzt ist aus mehreren Komponenten mit der Länge λ/2. Dies können sein: Schwingungserzeuger, bekannt als Konverter, im speziellen z.B. ein Langevin-Schwinger, Amplitudentransformationsstücke (bekannt als Booster), ggf. Verlängerungsstücke, sowie dem Koppelelement 106 (bekannt als Sonotrode). Der Anregungsaktor 100 kann jedoch auch als magnetoresistiver Aktor ausgebildet sein, bei dem durch Anlegen eines äußeren Magnetfeldes der elektrische Widerstand geändert werden kann.

Das Volumen des piezoelektrisch aktiven Materials kann mindestens 0,2 cm³, vorzugsweise 0,5 cm³, insbesondere mindestens 1 cm³, betragen. Vorteilhaft kann eine ausreichende Ultraschallleistung bei kleiner Baugröße des Anregungsaktors erreicht werden. Der wenigstens eine Anregungsaktor 100 kann eine Leistungsdichte von mindestens 5 Watt/cm³, vorzugsweise von mindestens 20 Watt/cm³, bezogen auf das Volumen des piezoelektrisch aktiven Materials des wenigsten einen Anregungsaktors 100 aufweisen. Eine entsprechend hohe Leistungsdichte ist vorteilhaft für eine handgehaltene kompakte Elektrowerkzeugmaschine 10 mit möglichst kleinen Abmessungen und geringen Herstellkosten.

Die im Gehäuse 20 angeordnete Elektronikeinheit 200 dient zum Beaufschlagen der Antriebseinheit 80 mit wenigstens Steuer- und/oder Regelsignalen, sowie der Spannungsversorgung des Anregungsaktors 100. Eine Betriebsspannungseinheit 90, hier als Batterie- oder Akkupack mit Batterien oder wiederaufladbaren Akkus 92 ausgebildet, dient zur Bereitstellung einer elektrischen Gleichspannung für die Elektronikeinheit 90, welche die Betriebsspannung in ein hochfrequentes Spannungssignal umsetzt, mit dem der Anregungsaktor 100 in gewünschter Weise zu Schwingungen angeregt wird.

Der Anregungsaktor 100 kann an der Werkzeugspitze eine Schwingamplitude von mindestens 3 µm, vorzugsweise mindestens 8 µm, insbesondere mindestens 12 µm aufweisen. Eine entsprechend hohe Schwingamplitude ist vorteilhaft für eine gute Leistungsübertragung auf das Werkstück und damit für einen hohen Arbeitsfortschritt durch die Elektrowerkzeugmaschine 10. Eingangsseitig der Elektronikeinheit 200 kann eine elektrische Leistung zur Beaufschlagung des wenigstens einen Anregungsaktors mindestens 20 Watt betragen. Vorteilhaft kann damit eine ausreichende Leistung für eine Elektrowerkzeugmaschine sichergestellt werden. Übliche Leistungen liegen im Heimwerkerbereich, für kleine Schneidsysteme etwa zwischen 20 Watt und 250 Watt, vorzugsweise 50 Watt bis 150 Watt. Für leistungsstärkere Anwendungen, z.B. Bohren, werden Leistungen ab 50 Watt bis 1000 Watt, vorzugsweise 200 Watt bis 500 Watt benötigt. Im professionellen Handwerkerbereich liegt der Leistungsbedarf für kleine Systeme etwa zwischen 50 und 400 Watt, vorzugsweise 100 bis 250 Watt. Bei großen Systemen werden Leistungen von 200 W bis 2000 Watt, vorzugsweise 400 Watt bis 1000 Watt eingesetzt. Trotzdem kann eine Elektrowerkzeugmaschine 10 mit handlichen Abmessungen geschaffen werden, die zum einen von der Hand des Bearbeiters umfasst oder gehalten werden kann und zum anderen ausreichend Leistung zur Bearbeitung bereitstellt. Es kann eine maximale elektrische Anregungsfeldstärke des wenigstens einen Anregungsaktors 100 im Bereich unterhalb von 300 V/mm liegen (bezogen auf die Dicke, insbesondere Scheibendicke, des piezoelektrisch aktiven Materials), vorzugsweise im Bereich zwischen 50 V/mm und 220 V/mm. Bei einer Scheibendicke des Anregungsaktors 100 von typischerweise 1 mm bis 10 mm, vorzugsweise 2 mm bis 6 mm, insbesondere um 5 mm liegen die elektrischen Spannungen bei unter 1000 Volt. Dies ermöglicht vorteilhaft einen Einsatz des Anregungsaktors 100 in der handgehaltenen Elektrowerkzeugmaschine 10 mit ausreichender mechanischer Ausgangsleistung bei vorteilhaft kleinen Abmessungen. Die Betriebsfrequenz des wenigstens einen Anregungsaktors 100 kann im Bereich zwischen 10 kHz und 1000 kHz, vorzugsweise zwischen 30 kHz und 50 kHz, insbesondere zwischen 35 kHz und 45 kHz, besonders bevorzugt um 40 kHz, liegen. Mit steigender Frequenz sinkt die Baugröße der Komponenten und steigt die mechanische Belastung des Schwingsystems, wobei sich im ausgewählten Frequenzbereich vorteilhafte Größenverhältnisse bei hoher Ausgangsleistung und günstigem Gewicht der Elektrowerkzeugmaschine ergeben.

Eine elektrische Ausgangsspannung der Betriebsspannungseinheit 90 kann bei Versorgung mit elektrochemischen Speichern im Bereich von 3 Volt bis 100 Volt DC liegen, vorzugsweise im Bereich von 3,5 Volt bis 40 Volt, insbesondere bei 36 Volt, 24 Volt, 18 Volt, 14,4 Volt, 12 Volt, 10,6 Volt, 7,2 Volt und 3,6 Volt. Vorteilhaft können Batteriepacks oder nachladbare Akkupacks eingesetzt werden, die klein und leicht genug sind, um eine gute Handhabbarkeit der Elektrowerkzeugmaschine bei hoher Ausgangsleistung noch zu gewährleisten. Für den netzfreien Betrieb können mit hoher Leistungsdichte bei relativ geringem Gewicht vorteilhaft Batterien auf der Basis Lithium-Ionen (Li-Ion) oder auch Nickel-Metallhydrid (NiMeH), Nickel-Cadmium (NiCd) eingesetzt werden. Alternativ können auch Bleibatterien und dergleichen eingesetzt werden.

Die jeweilige Elektrowerkzeugmaschine 10 weist eine Vorrichtung 300 zur Ausgabe eines Informationssignals auf, das abhängig von wenigstens einem Betriebsparameter der Elektrowerkzeugmaschine 10 ausgebbar ist. Die Vorrichtung 300 ist dazu ausgebildet, Frequenz und/oder Amplitude des Informationssignals abhängig von einem aktuellen Betriebsparameter der zu variieren. Das Informationssignal wird vorzugsweise während des gesamten Betriebs der Elektrowerkzeugmaschine 10 ausgegeben. Dies kann kontinuierlich oder auch gepulst erfolgen.

Die Elektrowerkzeugmaschine 10 gemäß Fig. 1 weist beispielsweise eine Vorrichtung 300 mit einem Lautsprecher 302 auf, etwa einen Piezolautsprecher, der während des Betriebs der Elektrowerkzeugmaschine 10 ein für den Anwender angenehmes Tonsignal mit geringer Lautstärke ausgibt, z.B. einen 440 Hz Sinuston, um den aktuellen Betriebszustand (z.B. an/aus) mitzuteilen. Das Informationssignal kann in seiner Frequenz und/oder seiner Lautstärke variiert werden, wodurch der Anwender etwa die aktuell benötigte Ultraschallleistung beim Schneiden ablenkungsfrei entnehmen kann. Die Frequenz kann beispielsweise in Analogie zu einem Geräuschbild einer elektromotorbetriebenen Elektrowerkzeugmaschine ausgehend von einem Leerlauf-Grundton mit steigender Bearbeitungsleistung gesenkt werden.

Die Elektrowerkzeugmaschine 10 gemäß Fig. 2 weist beispielsweise eine Vorrichtung 300 mit einer Vibrationseinheit 304 im Griffteil 40 und einer Leuchteinrichtung 306 in der Nähe des Werkzeugs 60 auf. In einer Ausführungsform kann die Leuchteinrichtung 304 beispielsweise so angebracht sein, dass mit ihr direkt das Arbeitswerkzeug 60 beleuchtet wird. Dadurch erfolgt gleichzeitig die Beleuchtung der Arbeitsfläche und die Statusrückmeldung an den Benutzer, ohne dass dieser den eigentlichen Bearbeitungsprozess aus dem Blick lassen muss. Dazu kann die Leuchteinrichtung 304 nach vorne abstrahlen oder z.B. an der Gehäusestirnseite angebracht sein.

Während des Betriebs der Elektrowerkzeugmaschine 10 kann ein für den Anwender fühlbares leichtes Vibrieren des Griffteils 40 mit geringer Amplitude erfolgen, um den aktuellen Betriebszustand (z.B. an/aus) mitzuteilen, ohne die Handhabung der Elektrowerkzeugmaschine 10 zu beeinträchtigen. Das Informationssignal kann in seiner Frequenz und/oder seiner Amplitude variiert werden, wodurch der Anwender etwa die aktuell benötigte Ultraschallleistung beim Bohren ablenkungsfrei entnehmen kann. Die Frequenz kann beispielsweise in Analogie zu einer elektromotorbetriebenen Elektrowerkzeugmaschine ausgehend von einer Leerlauf-Vibration mit steigender Bearbeitungsleistung gesenkt werden. Gleichzeitig kann die Leuchteinrichtung 306 beispielsweise in einer ersten Farbe, etwa grün, leuchten, solange Betriebsparameter in ihren erlaubten Bereichen sind und in einer zweiten Farbe, etwa rot, wenn ein oder mehrere Betriebsparameter einen kritischen Wert erreicht haben, etwa Betriebstemperatur, Batteriekapazität und dergleichen.

Die Elektrowerkzeugmaschine 10 gemäß Fig. 3 weist beispielsweise eine Vorrichtung 300 mit einem Lautsprecher 302 auf, etwa einen Piezolautsprecher, der während des Betriebs der Elektrowerkzeugmaschine 10 mit Ultraschall ein für den Anwender angenehmes Tonsignal mit geringer Lautstärke ausgibt, z.B. einen 440 Hz Sinuston, um den aktuellen Betriebszustand (z.B. an/aus) mitzuteilen. Das Informationssignal kann in seiner Frequenz und/oder seiner Lautstärke variiert werden, wodurch der Anwender etwa die aktuell benötigte Ultraschallleistung beim Schleifen ablenkungsfrei entnehmen kann. Wird die Elektrowerkzeigmaschine nur mit dem Elektromotor betrieben, kann die Ausgabe des Informationssignal unterbleiben.

Fig. 4 zeigt ein Ausführungsbeispiel einer Schaltung 400, die es ermöglicht, eine Information über die aktuell benötigte Arbeitsleistung des Ultraschall-Anregungsaktors 100 aus dem Betriebsstrom des Anregungsaktors 100 abzuleiten. Eine digitale Systemsteuerung 402 steuert eine Leistungselektronik 404 der Elektronikeinheit 200, welche das Werkzeug 60 bzw. den Anregungsaktor 100 beaufschlagt. Dabei fließt ein Betriebsstrom 410 zum Anregungsaktor 100.

Ein Messsignal 412 der aktuellen Erregerstromamplitude kann nach entsprechender Pegelanpassung in einem Operationsverstärker 406 über einen spannungsgesteuerten Oszillator 408 an die Vorrichtung 300 gegeben werden, die z.B. einen Lautsprecher 302 aufweist. In entsprechender Weise kann dies natürlich auch mit einer direkten Ansteuerung 414 der Vorrichtung 300 durch die digitale Systemsteuerung 402 erfolgen.

In einer weiteren Ausgestaltung kann anstelle des Stroms auch die Anregungsspannung oder die direkt ermittelte bzw. berechnete Betriebsleistung als Führungsgröße für das Tonsignal herangezogen werden.

Die beispielhaft dargestellte Schaltung 400 eignet sich nicht nur für handgehaltene Elektrowerkzeugmaschinen, sondern auch für Ultraschall-Stationärgeräte, welche eine derartige Vorrichtung 300 umfassen zur Ausgabe eines Informationssignals, das abhängig von wenigstens einem Betriebsparameter des Ultraschall-Stationärgeräts ausgebbar ist, und wobei die Vorrichtung 300 dazu ausgebildet ist, Frequenz und/oder Amplitude des Informationssignals abhängig von einem aktuellen Betriebsparameter der zu variieren.

## Patentansprüche

1. Elektrowerkzeugmaschine (10) umfassend einen Bereich (50) mit Ultraschallanregung für ein linear und/oder oszillierend antreibbares Werkzeug (60), mit einer Antriebseinheit (80) zur Ultraschallanregung, einer Elektronikeinheit (200) zum Beaufschlagen der Antriebseinheit (80) mit wenigstens Steuer- und/oder Regelsignalen, sowie einer Betriebsspannungseinheit (90), wobei die Antriebseinheit (80) wenigstens einen Ultraschall-Anregungsaktor (100) umfasst, welcher im Betrieb von der Betriebsspannungseinheit (90) elektrisch versorgt ist und von der Elektronikeinheit (200) gesteuert oder geregelt ist, wobei eine Vorrichtung (300) zur Ausgabe eines Informationssignals vorhanden ist, das abhängig von wenigstens einem Betriebsparameter der Elektrowerkzeugmaschine (10) ausgebbar ist, wobei die Vorrichtung (300) dazu ausgebildet ist, Frequenz und/oder Amplitude des Informationssignals abhängig von einem oder mehreren aktuellen Betriebsparametern zu variieren, **dadurch gekennzeichnet, dass** ein erster Bestandteil des Informationssignals mit einem ersten Betriebsparameter und ein zweiter Bestandteil des Informationssignals mit einem zweiten Betriebsparameter verknüpfbar ist.

2. Elektrowerkzeugmaschine nach Anspruch 1, **dadurch gekennzeichnet, dass** die Vorrichtung (300) dazu ausgebildet ist, die Frequenz und/oder die Amplitude mit zunehmender Bearbeitungsleistung abzusenken.

3. Elektrowerkzeugmaschine nach Anspruch 1, **dadurch gekennzeichnet, dass** die Vorrichtung (300) dazu ausgebildet ist, die Frequenz und/oder die Amplitude mit zunehmender Bearbeitungsleistung zu erhöhen.

4. Elektrowerkzeugmaschine nach Anspruch 2 oder 3, **dadurch gekennzeichnet, dass** die Vorrichtung (300) zur Veränderung der Frequenz und/oder der Amplitude mit der Betriebsspannungseinheit (90) so gekoppelt ist, dass die Frequenz und/oder die Amplitude abhängig vom aktuellen Betriebsstrom oder von der aktuellen Betriebsspannung einstellbar ist.

5. Elektrowerkzeugmaschine nach einem der vorhergehenden Ansprüche, **dadurch gekennzeichnet, dass** die Vorrichtung (300) dazu ausgebildet ist, bei Erreichen oder Überschreiten eines kritischen Betriebsparameters einen Alarm auszusenden.

6. Elektrowerkzeugmaschine nach einem der vorhergehenden Ansprüche, **dadurch gekennzeichnet, dass** die Vorrichtung (300) eine Lautsprechereinrichtung (302) umfasst.

7. Elektrowerkzeugmaschine nach einem der vorhergehenden Ansprüche, **dadurch gekennzeichnet, dass** die Vorrichtung (300) eine mechanische Vibrationseinheit (304) umfasst, vorzugsweise in einem Griffbereich (40) eines Gehäuses (20) der Elektrowerkzeugmaschine.

8. Elektrowerkzeugmaschine nach einem der vorhergehenden Ansprüche, **dadurch gekennzeichnet, dass** die Vorrichtung (300) eine Leuchteneinheit (306) umfasst.

9. Elektrowerkzeugmaschine nach Anspruch 8, **dadurch gekennzeichnet, dass** die Leuchteneinheit (306) dazu vorgesehen ist, einen Arbeitsbereich auszuleuchten.

10. Elektrowerkzeugmaschine nach einem der vorhergehenden Ansprüche, **dadurch gekennzeichnet, dass** die Elektrowerkzeugmaschine als ein Ultraschall-Stationärgerät realisiert ist, wobei das Ultraschall-Stationärgerät ferner eine Vorrichtung (300) zur Ausgabe eines Informationssignals umfasst, das abhängig von wenigstens einem Betriebsparameter des Ultraschall-Stationärgeräts (10) ausgebbar ist, wobei die Vorrichtung (300) dazu ausgebildet ist, Frequenz und/oder Amplitude des Informationssignals abhängig von einem aktuellen Betriebsparameter der zu variieren.

## Claims

1. Electric machine tool (10) comprising a region (50) with ultrasonic excitation for a tool (60) which can be driven linearly and/or in oscillating fashion, with a drive unit (80) for ultrasonic excitation, an electronics unit (200) for applying at least control and/or regulation signals to the drive unit (80), and an operating voltage unit (90), the drive unit (80) comprising at least one ultrasonic excitation actuator (100), which, during operation, is supplied with electricity from the operating voltage unit (90) and is subjected to control or regulation by the electronics unit (200), an apparatus (300) for outputting an information signal being present, which can be output depending on at least one operational parameter of the electric machine tool (10), the apparatus (300) being designed to vary frequency and/or amplitude of the information signal depending on one or more present operational parameters, **characterized in that** a first component of the information signal can be linked to a first operational parameter, and a second component of the information signal can be linked to a second operational parameter.

2. Electric machine tool according to Claim 1, **characterized in that** the apparatus (300) is designed to reduce the frequency and/or the amplitude as the machining power increases.

3. Electric machine tool according to Claim 1, **characterized in that** the apparatus (300) is designed to increase the frequency and/or the amplitude as the machining power increases.

4. Electric machine tool according to Claim 2 or 3, **characterized in that** the apparatus (300) for changing the frequency and/or the amplitude is coupled to the operating voltage unit (90) in such a way that the frequency and/or the amplitude can be set depending on the present operating current or on the present operating voltage.

5. Electric machine tool according to one of the preceding claims, **characterized in that** the apparatus (300) is designed to emit an alarm when a critical operational parameter is reached or exceeded.

6. Electric machine tool according to one of the preceding claims, **characterized in that** the apparatus (300) comprises a loudspeaker device (302).

7. Electric machine tool according to one of the preceding claims, **characterized in that** the apparatus (300) comprises a mechanical vibration unit (304), preferably in a grip region (40) of a housing (20) of the electric machine tool.

8. Electric machine tool according to one of the preceding claims, **characterized in that** the apparatus (300) comprises a luminaire unit (306).

9. Electric machine tool according to Claim 8, **characterized in that** the luminaire unit (306) is provided for illuminating a working area.

10. Electric machine tool according to one of the preceding claims, **characterized in that** the electric machine tool is realized as an ultrasonic stationary appliance, the ultrasonic stationary appliance further comprising an apparatus (300) for outputting an information signal, which can be output depending on at least one operational parameter of the ultrasonic stationary appliance (10), the apparatus (300) being designed to vary the frequency and/or amplitude of the information signal depending on a present operational parameter.

## Revendications

1. Machine-outil électrique (10) comprenant une zone (50) avec excitation aux ultrasons pour un outil (60) pouvant être entraîné linéairement et/ou en oscillation, comprenant une unité d'entraînement (80) servant à l'excitation aux ultrasons, une unité électronique (200) destinée à charger l'unité d'entraînement (80) au moins avec des signaux de commande et/ou de régulation, ainsi qu'une unité à tension de service (90), l'unité d'entraînement (80) comprenant au moins un actionneur d'excitation à ultrasons (100) qui, en fonctionnement, est alimenté électriquement par l'unité à tension de service (90) et qui est commandé ou régulé par l'unité électronique (200), un dispositif (300) servant à délivrer un signal d'information étant présent, lequel peut être délivré en fonction d'au moins un paramètre de fonctionnement de la machine-outil électrique (10), le dispositif (300) étant configuré pour faire varier la fréquence et/ou l'amplitude du signal d'information en fonction d'un ou plusieurs paramètres de fonctionnement actuels, **caractérisée en ce qu'**une première composante du signal d'information peut être liée à un premier paramètre de fonctionnement et une deuxième composante du signal d'information à un deuxième paramètre de fonctionnement.

2. Machine-outil électrique selon la revendication 1, **caractérisée en ce que** le dispositif (300) est configuré pour diminuer la fréquence et/ou l'amplitude à mesure que la puissance d'usinage augmente.

3. Machine-outil électrique selon la revendication 1, **caractérisée en ce que** le dispositif (300) est configuré pour augmenter la fréquence et/ou l'amplitude à mesure que la puissance d'usinage augmente.

4. Machine-outil électrique selon la revendication 2 ou 3, **caractérisée en ce que** le dispositif (300), pour modifier la fréquence et/ou l'amplitude, est connecté à l'unité à tension de service (90) de telle sorte que la fréquence et/ou l'amplitude sont réglables en fonction du courant de service actuel ou de la tension de service actuelle.

5. Machine-outil électrique selon l'une des revendications précédentes, **caractérisée en ce que** le dispositif (300) est configuré pour émettre une alarme lorsqu'un paramètre de fonctionnement critique est atteint ou dépassé.

6. Machine-outil électrique selon l'une des revendications précédentes, **caractérisée en ce que** le dispositif (300) comprend un appareil à haut-parleur (302).

7. Machine-outil électrique selon l'une des revendications précédentes, **caractérisée en ce que** le dispositif (300) comprend une unité vibrante (304), de préférence dans une zone de poignée (40) d'un boîtier (20) de la machine-outil électrique.

8. Machine-outil électrique selon l'une des revendications précédentes, **caractérisée en ce que** le dispositif (300) comprend une unité éclairante (306).

9. Machine-outil électrique selon la revendication 8, **caractérisée en ce que** l'unité éclairante (306) est conçue pour éclairer une zone de travail.

10. Machine-outil électrique selon l'une des revendications précédentes, **caractérisée en ce que** la machine-outil électrique est réalisée sous la forme d'un appareil fixe à ultrasons, l'appareil fixe à ultrasons comprenant en outre un dispositif (300) servant à délivrer un signal d'information qui peut être délivré en fonction d'au moins un paramètre de fonctionnement de l'appareil fixe à ultrasons 10), le dispositif (300) étant configuré pour faire varier la fréquence et/ou l'amplitude du signal d'information en fonction d'un paramètre de fonctionnement actuel.
